# EUROPEAN PATENT APPLICATION

(11) **EP 4 660 338 A1**
(43) Date of publication of application: **10.12.2025**
(21) Application number: 24766981.5
(22) Date of filing: 28.02.2024
(51) Int. Cl.: C22C 14/00, C22C 30/00, C22F 1/00, C22F 1/18

(54) **TIAL-BASED ALLOY AND METHOD FOR PRODUCING SAME**

(30) Priority: 07.03.2023 JP 2023034587
(71) Applicant: Mitsubishi Heavy Industries Aero Engines, Ltd., Komaki-shi, Aichi 485-0826, (JP); INSTITUTE OF SCIENCE TOKYO, Tokyo 152-8550 (JP); Osaka Yakin Kogyo Co., Ltd., Osaka city Osaka 533-0005 (JP)
(72) Inventor: SOBU, Shintaro, Tokyo 100-8332 (JP); SHINDO, Kentaro, Tokyo 100-8332 (JP); FUKUSHIMA, Akira, Komaki-shi, Aichi 485-0826 (JP); TAKEYAMA, Masao, Tokyo 152-8550 (JP); NAKASHIMA, Hirotoyo, Tokyo 152-8550 (JP); YAMAGATA, Ryosuke, Tokyo 152-8550 (JP); HANAMI, Kazuki, Osaka-shi, Osaka 533-0005 (JP); DOI, Kenji, Osaka-shi, Osaka 533-0005 (JP); IWASA, Yasuhiro, Osaka-shi, Osaka 533-0005 (JP)
(74) Representative: Studio Torta S.p.A.
(86) International application number: PCT/JP2024/007246
(87) International publication number: WO 2024/185610

(57) **Abstract**

The present disclosure provides a TiAl-based alloy combining the desired strength, ductility, and creep properties, and a method for producing the same. A TiAl-based alloy according to the present disclosure comprising, in atomic percent, Al: 45% to 49 %, β-stabilizing elements: 3% to 11%, Ni: ≤ 1.0%, C: ≤ 0.6%, Si: ≤ 0.5%, O: ≤ 1.5%, the balance being Ti and inevitable impurities, in which the β-stabilizing elements are any of Cr, Nb, V, Mn and Mo or a combination thereof, the metal structure comprises (α₂/γ) lamellar grains and a cellular structure or a secondary lamellar structure precipitated at (α₂/γ) lamellar grain boundaries, the cellular structure is a (β/γ) cellular structure or an (α₂/γ/β) cellular structure, the secondary lamellar structure has (α₂/γ) lamellar grains having a grain diameter smaller than that of the (α₂/γ) lamellar grains, and a volume fraction of the cellular structure or the secondary lamellar structure is 1 vol% or more and 50 vol% or less.

## Description

### [Technical Field]

The present disclosure relates to a TiAl-based alloy and a method for producing the same.

### [Background Art]

A TiAl-based alloy is an alloy (intermetallic compound) in which Ti (titanium) and Al (aluminum) are bonded together to form the alloy (see Patent Literature 1). The TiAl-based alloy, which is lightweight and exhibits high strength at elevated temperatures, is applied to structural materials for high-temperature use, such as in engines and aerospace equipment.

### [Citation List]

### [Patent Literature]

[PTL 1] European Patent Application Publication No. 2851445

### [Non Patent Literature]

[NPL 1] Y-W.Kim: Materials Science and Engineering A192/193(1995) 519-533
[NPL 2] Y-W.Kim and S-L.Kim: Intermetallics 53(2014) 92-101

### [Summary of Invention]

### [Technical Problem]

It is widely known that refinement of the prior-α grain diameter or precipitation of a γ phase and/or a β phase at prior-α grain boundaries or the like achieve high strength and high ductility in TiAl-based alloys (see Non Patent Literature 1).

On the other hand, a Duplex-type TiAl-based alloy in which a grain boundary γ phase is precipitated exhibits significantly lower creep properties compared to a TiAl-based alloy having a fully lamellar structure without γ phase precipitation (see Non Patent Literature 2).

Strength, ductility, and creep properties are practically important properties of TiAl-based alloys, and it is desired to improve these properties simultaneously. However, as described in Non Patent Literature 2, it is difficult to obtain a TiAl-based alloy that combines the desired strength, ductility, and creep properties. Thus, the problem is that it is currently necessary to use TiAl-based alloys in which one of these properties is sacrificed.

The present disclosure has been made in view of such circumstances, and an object thereof is to provide a TiAl-based alloy combining desirable strength, ductility, and creep properties, and a method for producing the same.

### [Solution to Problem]

To solve the above-described problem, the TiAl-based alloy and the method for producing the same according to the present disclosure employ the following means.

The first aspect of the present disclosure provides a TiAl-based alloy comprising, in atomic percent, Al: 45% to 49 %, β-stabilizing elements: 3% to 11%, Ni: ≤ 1.0%, C: ≤ 0.6%, Si: ≤ 0.5%, O: ≤ 1.5%, the balance being Ti and inevitable impurities, the β-stabilizing elements being any of Cr, Nb, V, Mn and Mo or a combination thereof, wherein the Ti-Al-based alloy has a metal structure comprising (α₂/γ) lamellar grains and a cellular structure or a secondary lamellar structure precipitated at (α₂/γ) lamellar grain boundaries, and wherein the cellular structure is a (β/γ) cellular structure or an (α₂/γ/β) cellular structure, the secondary lamellar structure has (α₂/γ) lamellar grains having a grain diameter smaller than that of the (α₂/γ) lamellar grain, and a volume fraction of the cellular structure or the secondary lamellar structure is 1 vol% or more and 50 vol% or less.

The second aspect of the present disclosure provides a method for producing a TiAl-based alloy, wherein the TiAl-based alloy is held at a first temperature for a predetermined period of time in an (α + γ) two-phase region, an α single-phase region, a (β + α) two-phase region, or a (β + α + γ) three-phase region, then the TiAl-based alloy is quenched at a cooling rate equal to or higher than air cooling and the quenched TiAl-based alloy is held at a second temperature for a predetermined period in a (β + γ) two-phase region, a (β + α₂ + γ) three-phase region, or an (α₂ + γ) two-phase region of time to form a metal structure comprising (α₂/γ) lamellar grains and a cellular structure or a secondary lamellar structure precipitated at (α₂/γ) lamellar grain boundaries, and wherein the second temperature and a holding time at the second temperature are controlled so that the cellular structure is a (β/γ) cellular structure or an (α₂/γ/β) cellular structure, and the secondary lamellar structure has (α₂/γ) lamellar grains having a grain diameter smaller than that of the (α₂/γ) lamellar grains, and a volume fraction of the cellular structure or the secondary lamellar structure is 1 vol% or more and 50 vol% or less, the TiAl-based alloy containing, in atomic percent, Al: 45% to 49 %, β-stabilizing elements: 3% to 11%, Ni: ≤ 1.0%, C: ≤ 0.6%, Si: ≤ 0.5%, O: ≤ 1.5%, the balance being Ti and inevitable impurities, the β-stabilizing elements being any of Cr, Nb, V, Mn and Mo or a combination thereof.

### [Advantageous Effects of Invention]

According to the present disclosure, TiAl-based alloy combining the desired strength, ductility, and creep properties can be obtained by controlling the volume fraction of the cellular structure or the secondary lamellar structure.

### [Brief Description of Drawings]

[Fig. 1] Fig. 1 is a phase diagram of a TiAl-based alloy (Al: 47 atomic%) with the addition of β-stabilizing elements.
[Fig. 2] Fig. 2 shows a structure micrograph of Ti-47Al-5Nb-3Cr [atomic%].
[Fig. 3] Fig. 3 shows a structure micrograph of Ti-46Al-5Nb-1Cr [atomic%] subjected to heat treatment in an aspect different from that of Fig. 2.
[Fig. 4] Fig. 4 shows the relationship among the volume fraction of the cellular structure, the tensile properties, and the rupture time.

### [Description of Embodiments]

One embodiment of the TiAl-based alloy and a method for producing the same according to the present disclosure will be described below with reference to the drawings.

The TiAl-based alloy and a method for producing the same according to the present embodiment can be applied to components such as the low-pressure turbine (LPT) moving blade and high-pressure compressor (HPC) moving blade of an aircraft engine, or the turbine wheel of a turbocharger.

### <TiAl-based Alloy>

The TiAl-based alloy may be a component produced by casting method, forging method, powder metallurgy method or the like. The powder metallurgy method may be an additive manufacturing (AM), a metal powder injection molding (MIM), or a spark plasma sintering method (SPS). TiAl-based alloys produced by MIM contain more oxygen (O) compared to those produced by other methods.

The TiAl-based alloy is an alloy composed of an intermetallic compound of Ti and Al. The TiAl-based alloy primarily contains Ti and Al as its primary components. "Primary components" refer to the components that are present in large amounts.

A TiAl-based alloy comprises, in atomic percent, Al: 45% to 49 %, β-stabilizing elements: 3% to 11%, Ni: ≤ 1.0%, C: ≤ 0.6%, Si: ≤ 0.5%, O: ≤ 1.5%, the balance being Ti and inevitable impurities.

The content of Al is 45 atomic% or more and 49 atomic% or less, and preferably 46 atomic% or more and 48 atomic% or less. When the content of Al is lower than 45 atomic%, a cellular structure including a β phase, which is effective in improving strength at high temperatures, tends to be formed. This improves high-temperature strength. However, in such a case, residual prior-β grains and an increased amount of β phase within the cellular structure tend to occur, making it difficult to achieve excellent creep properties concurrently. When the content of Al exceeds 49 atomic%, the γ single-phase region becomes a stable equilibrium phase even at high temperatures, making it difficult to precipitate a cellular structure or a secondary lamellar structure at the (α₂/γ) lamellar grain boundaries.

The β-stabilizing elements are any of Cr, Nb, V, Mn, and Mo or in combination thereof. The content of the β-stabilizing elements is 3 atomic% or more and 11 atomic% or less, and preferably 4 atomic% or more and 10 atomic% or less. When the content of the β-stabilizing elements is lower than 3 atomic%, the temperature of the (β + α) two-phase region shifts toward the higher-temperature side, and the temperature range becomes excessively narrow, thereby degrading the manufacturability such as forgeability and sinterability. When the content of the β-stabilizing elements exceeds 11 atomic%, the thermal stability of the (α₂/γ) lamellar structure decreases, making it difficult to achieve excellent creep properties.

The reason why the content range of Al is narrower than that of the β-stabilizing elements is that variations in the Al content have a greater influence on the phase transformation in the TiAl-based alloy.

The content of Ni is 1.0 atomic% or less. In the case where a powder metallurgy method is employed, particularly when the method includes a sintering process such as MIM or SPS, Ni can be used as a sintering aid to promote sintering, thereby improving the sintered density of the TiAl-based alloy sintered body. Although Ni also functions as a β-stabilizing element, the Ni content within the above range does not influence the phase transformation in the TiAl-based alloy as significantly as the Al content does.

The content of O is 1.5 atomic% or less. O contained in the TiAl- based alloy is mainly derived from the raw materials of the TiAl-based alloy and the production conditions thereof. Since O acts as an α-stabilizing element, an increase in the O content causes the α single-phase region, the (α + γ) two-phase region, and the (α₂ + γ) two-phase region to expand toward the side with a higher content of β-stabilizing elements. When the O content is excessively high, the ductility decreases.

The content of C is 0.6 atomic% or less. C can improve the creep properties of the TiAl-based alloy. Although C functions as an α-stabilizing element, the C content within the above range does not influence the phase transformation in the TiAl-based alloy as significantly as the O content does.

The content of Si is 0.5 atomic% or less. Si can improve the creep properties of the TiAl-based alloy. The Si content within the above range does not influence the phase transformation in the TiAl-based alloy as significantly as the Al content does.

Inevitable impurities are H, N, Fe, and the like.

In the production method of the TiAl-based alloy according to the present embodiment, the crystal grain diameter can be controlled by selecting an appropriate first temperature in the heat treatment, and thus the inclusion of B, which is effective for crystal grain refinement, is not essential.

The composition of the above TiAl-based alloy converted into weight is as follows.

The content of Al is 27.6 wt% or more and 35.8 wt% or less.

The content of the β-stabilizing elements is 3.9 wt% or more and 25.1 wt% or less. In the case where the β-stabilizing element is Cr alone, the Cr content is 4.0 wt% or more and 15.4 wt% or less. In the case where the β-stabilizing element is Nb alone, the Nb content is 6.9 wt% or more and 24.5 wt% or less. In the case where the β-stabilizing element is V alone, the V content is 3.9 wt% or more and 15.1 wt% or less. In the case where the β-stabilizing element is Mn alone, the Mn content is 4.2 wt% or more and 16.1 wt% or less. In the case where the β-stabilizing element is Mo alone, the Mo content is 7.1 wt% or more and 25.1 wt% or less.

The content of Ni is 1.58 wt% or less. The content of C is 0.20 wt% or less. The content of Si is 0.38 wt% or less. The content of O is 0.65 wt% or less.

The metal structure of the TiAl-based alloy includes a lamellar structure and a cellular structure or a secondary lamellar structure. The volume fraction of the cellular structure or the secondary lamellar structure in the metal structure of the TiAl-based alloy is 1 vol% or more and 50 vol% or less.

The constitution of the metal structure is not limited to the above, and may further include other constituent phases such as a massive γ phase in addition to the (α₂/γ) lamellar grains and the cellular structure or the secondary lamellar structure. It is preferable that the volume fraction of the other constituent phases is 30 vol% or less.

The lamellar structure is a lamellar grain in which α₂ phase and γ phase are regularly laminated in layers.

The cellular structure is a (β/γ) cellular structure or an (α₂/γ/β) cellular structure.

The cellular structure is an aggregate of fine mixed structures (cells) of β phase and γ phase, or α₂ phase, γ phase, and β phase, generated by discontinuous precipitation reaction. The cell diameter of one cell is from 1 µm to 25 µm, which is a very fine structure, and has a feature in which a plurality of cells are present in a state of being continuously aggregated. In some cases, the β phase is present in a form in which the β phase is scattered at the cell boundary.

The massive γ phase, which are distinguished as other constituent phases, is mainly composed of the γ phase. Meanwhile, a mixed structure of the β phase and the γ phase may be formed during the cooling process to room temperature, but such a mixed structure does not form a structural morphology in the form of a continuously aggregated structure composed of cells having a cell diameter ranging from 1 µm to 25 µm. This differs from the above cellular structure.

The secondary lamellar structure is an aggregate of (α₂/γ) lamellar grains having a smaller grain diameter than that of the above lamellar structure ((α₂/γ) lamellar grains), and is precipitated at the grain boundaries of the lamellar structure.

In the TiAl-based alloy according to the present embodiment, the secondary lamellar structure constitutes an aggregate of (α₂/γ) lamellar grains mainly composed of the γ phase, regardless of the γ phase ratio in the lamellar structure ((α₂/γ) lamellar grains) prior to the precipitation of the secondary lamellar structure, and even when the (α₂/γ) lamellar grains have the same phase constitution, they can be clearly distinguished.

### <Production Method>

A method for producing the above TiAl-based alloy will now be described.

The method for producing a TiAl-based alloy according to the present embodiment comprises a step of heat treating a TiAl-based alloy produced by a casting method, a forging method, a powder metallurgy method or the like. The heat treatment is carried out in two stages.

### (First Heat Treatment)

In the first stage of the heat treatment, the TiAl-based alloy is heated to a first temperature and held at the first temperature for a predetermined period of time. The rate of temperature increase during the heating of the TiAl-based alloy may be selected optionally. After being held for the predetermined period of time, the TiAl-based alloy is quenched and cooled to at least a temperature equal to or lower than a second temperature, which will be described later.

The first temperature is a temperature at which the TiAl-based alloy is held in an (α + γ) two-phase region, an α single-phase region, a (β + α) two-phase region, or a (β + α + γ) three-phase region. When the first temperature is set to the temperature of the (α + γ) two-phase region, the (β + α) two-phase region, or the (β + α + γ) three-phase region, it is preferable that the temperature is selected from among temperatures close to the α single-phase region within the (α + γ) two-phase region, the (β + α) two-phase region, or the (β + α + γ) three-phase region. The term "close" refers to a temperature range in which the α phase fraction, calculable by applying the lever rule from a phase equilibrium diagram or an isothermal section diagram, becomes 70% or more.

For example, the first temperature is 1200°C or more and 1500°C or less, and preferably 1250°C or more and 1450°C or less.

For example, the holding time at the first temperature is one minute or more and 16 hours or less, and preferably 30 minutes or more and eight hours or less.

The term "quench" means lowering the temperature at a cooling rate equal to or higher than air cooling. The specific cooling rate during quenching is an average cooling rate from the first temperature to 1000°C, and is 30°C/min or more and 800°C/min or less, and preferably 100°C/min or more and 400°C/min or less. The quenching can be performed, for example, by gas fan cooling using an inert gas (such as Ar or N₂). The cooling rate inside the material varies depending on the size of the material subjected to heat treatment, but it is possible to control the cooling rate appropriately by adjusting the gas flow rate.

### (Second Heat Treatment)

In the second stage of the heat treatment, the TiAl-based alloy having undergone the first heat treatment is heated to a second temperature, and then held at the second temperature for a predetermined period of time. The rate of temperature increase during the heating of the TiAl-based alloy may be selected optionally. After being held for the predetermined period of time, the TiAl-based alloy is cooled and lowered in temperature to room temperature. The cooling rate is optional.

The second temperature is a temperature at which the TiAl-based alloy is held in a (β + γ) two-phase region, a (β + α₂ + γ) three-phase region, or an (α₂ + γ) two-phase region. When it is desired to form a secondary lamellar structure, the second temperature is set to the temperature of the (α₂ + γ) two-phase region or the (β + α₂ + γ) three-phase region close to the (α₂ + γ) two-phase region. When it is desired to form a cellular structure, the second temperature is set to the temperature of the (β + γ) two-phase region or the (β + α₂ + γ) three-phase region close to the (β + γ) two-phase region.

For example, the second temperature is 900°C or more and 1200°C or less, and preferably 950°C or more and 1150°C or less.

The second temperature is set to be at least 10°C lower than the first temperature. The second temperature is a temperature that exists in a temperature range corresponding to a phase state different from that at the first temperature.

The holding time at the second temperature is controlled so that the volume fraction of the cellular structure or the secondary lamellar structure falls within a range of 1 vol% or more to 50 vol% or less. A longer the holding time at the second temperature allows the volume fraction of the cellular structure or the secondary lamellar structure to be increased.

The cellular structure and the secondary lamellar structure have a fine structure mainly composed of the γ phase. By containing such a fine cellular structure or secondary lamellar structure, strength, yield strength, and ductility are improved. On the other hand, the lamellar structure exhibits excellent creep properties. The cellular structure and the secondary lamellar structure are capable of improving creep properties by preventing deformation of grain boundaries. However, since the lamellar structure plays a primary role in creep properties, it is preferable that the volume fraction of the cellular structure or the secondary lamellar structure is not excessively high.

By controlling the volume fraction of the cellular structure or the secondary lamellar structure falling within the range of 1 vol% or more to 50 vol% or less, it is possible to obtain a TiAl-based alloy combining the desired strength, ductility, and creep properties. The holding time for the volume fraction of the cellular structure or the secondary lamellar structure falling within the range of 1 vol% or more to 50 vol% or less can be obtained by preliminary tests or the like.

For example, the holding time at the second temperature is one minute or more and 240 hours or less, and preferably 30 minutes or more and 48 hours or less.

The second heat treatment may be performed consecutively after the first heat treatment, but is not limited thereto, and may be performed separately from the first heat treatment with a time interval.

The transformation temperature ranges of the respective phases vary depending on the composition of the TiAl-based alloy. The first temperature and the second temperature are appropriately selected based on a phase diagram corresponding to the composition of the TiAl-based alloy to be subjected to the heat treatment.

Next, with reference to the drawings, the effects of the above-described heat treatment will be explained.

### (State Diagram)

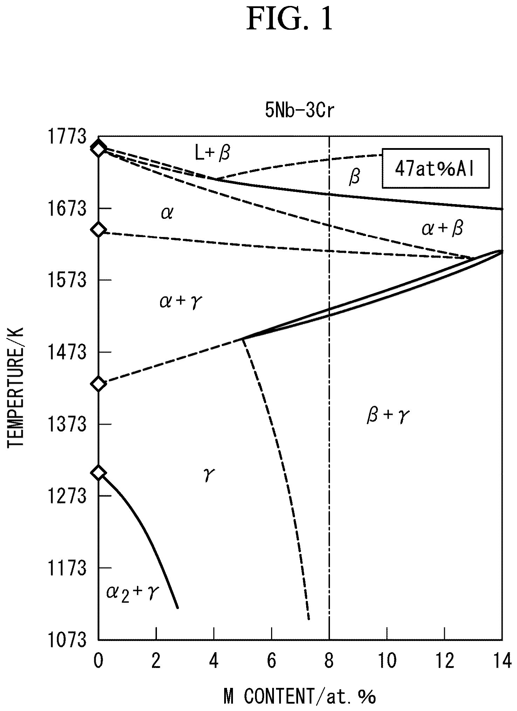

Fig. 1 shows a phase diagram of a TiAl-based alloy (Al: 47 atomic%) with the addition of β-stabilizing elements. In the figure, the horizontal axis represents the M content (atomic%) and the vertical axis represents the temperature (K). The β-stabilizing elements (M) are Nb (5 atomic%) and Cr (3 atomic%). The O content in the TiAl-based alloy is 0.13 atomic%.

According to Fig. 1, as the content of the β-stabilizing elements (M) increases, a phase constitution containing a β phase can be obtained even at lower temperatures. This is because the addition of the β-stabilizing elements allows the β phase to stabilize and exist. Similar tendencies are observed when a β-stabilizing element other than Nb and Cr is added.

Although not shown in Fig. 1, the transformation temperature ranges of each phase shift depending on the oxygen content.

By selecting the first temperature and the second temperature within an appropriate range of the phase diagram in accordance with the contents of the β-stabilizing elements and oxygen, and performing heat treatment at those temperatures, a cellular structure or a secondary lamellar structure can be precipitated.

At the first temperature, the TiAl-based alloy is held in any of the (α + γ) two-phase region, the α single-phase region, the (β + α) two-phase region, or the (β + α + γ) three-phase region. When the first temperature is set to the temperature of the (α + γ) two-phase region, the (β + α) two-phase region, or the (β + α + γ) three-phase region, it is preferable that the temperature is selected from among temperatures close to the α single-phase region within the (α + γ) two-phase region, the (β + α) two-phase region, or the (β + α + γ) three-phase region. At the first temperature, the α phase becomes the main constituent phase of the TiAl-based alloy. When cooled, the α phase transforms into a lamellar (α₂/γ) structure in which the α₂ phase and the γ phase are alternately stacked in layers, or alternatively, if the cooling rate during quenching is high, the α phase transforms into a feathery structure. However, by being held at the second temperature in the second heat treatment, the structure is ultimately transformed into a lamellar (α₂/γ) structure.

By holding at the first temperature for a predetermined period of time and then quenching, a supersaturated solid solution having high γ forming ability and β forming ability is formed in the TiAl-based alloy.

After the first heat treatment, by holding the TiAl-based alloy at a second temperature lower than the first temperature, a (β/γ) cellular structure, an (α₂/γ/β) cellular structure, or an (α₂/γ) secondary lamellar structure is formed from the prior-α grain boundaries ((α₂/γ) lamellar grain boundaries).

### (Structure Micrograph)

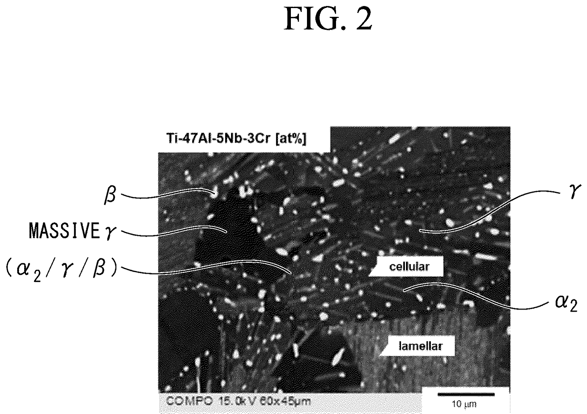

Fig. 2 shows a structure micrograph of Ti-47Al-5Nb-3Cr [atomic%]. The O content in the TiAl-based alloy is 0.80 atomic%. The Ti-47Al-5Nb-3Cr [atomic%] is a TiAl-based alloy that has been subjected to the first heat treatment at 1300°C, quenched at a rate of 450°C/min, and then subjected to the second heat treatment at 1000°C.

In the TiAl-based alloy shown in Fig. 2, it can be confirmed that a fine (α₂/γ/β) cellular structure (cellular) is precipitated at the grain boundaries of the (α₂/γ) lamellar structure (lamellar).

In the state diagram of Fig. 1, the amount of O added, which functions as an α-stabilizing element, is not taken into consideration, and thus the second temperature is in the (β + γ) two-phase region. The cellular structure is an equilibrium phase, and it is revealed, conversely, that the phase diagram falls within the (β + α₂ + γ) three-phase region, in view of the amount of O added. As such, even in alloys containing components such as O that are not normally considered in state diagram, it is possible to correct the state diagram based on experimental data and accurately set the first temperature and the second temperature.

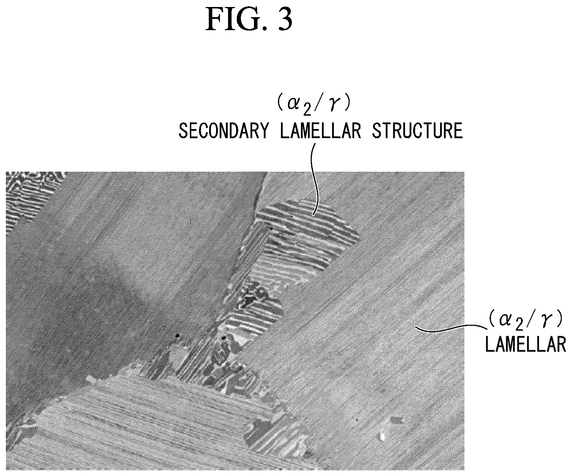

Fig. 3 shows a structure micrograph of Ti-46Al-5Nb-1Cr [atomic%]. The O content in the TiAl-based alloy is 0.88 atomic%. The Ti-46Al-5Nb-1Cr [atomic%] alloy is a TiAl-based alloy that has been subjected to the first heat treatment at 1350°C, quenched at a rate of 450°C/min, and then subjected to the second heat treatment at 1100°C.

In the TiAl-based alloy shown in Fig. 3, it can be confirmed that a fine structure of (α₂/γ) secondary lamellar structure is precipitated at the grain boundaries of the (α₂/γ) lamellar structure.

In the state diagram of Fig. 1, the amount of O added, which functions as an α-stabilizing element, is not taken into consideration, and thus the second temperature is in the γ single-phase region. The secondary lamellar structure is an equilibrium phase, and it is revealed, conversely, that the phase diagram falls within the (α₂ + γ) three-phase region, in view of the amount of O added. As such, even in alloys containing components such as O that are not normally considered in state diagram, it is possible to correct the state diagram based on experimental data and accurately set the first temperature and the second temperature.

### (Volume Fraction of Cellular Structure)

Using the following alloys, the influence of the volume fraction of the cellular structure on tensile properties and creep properties was examined.
Alloy 1: Ti-46.0Al-5Nb-3Cr-0.2C-0.80O [atomic%]
Alloy 2: Ti-46.6Al-5Nb-3Cr-0.6C-0.82O [atomic%]

The above alloy compositions are not the blending compositions of raw materials, but chemical analysis values after the second heat treatment.

The first heat treatment was carried out at a first temperature of 1300°C for a holding time of eight hours and at a cooling rate of 450°C/min. After cooling to room temperature, a second heat treatment was separately conducted. The second heat treatment was carried out at a second temperature of 1000°C for a holding time of 16 hours, followed by fan cooling in an Ar gas atmosphere. The volume fraction of the cellular structure was determined by quantifying the area fraction occupied by the cellular structure in a multiple backscattered electron image (BEI) obtained using a scanning electron microscope (SEM), through image analysis, and then calculating the average area fraction from the plurality of BEI, which is equivalent to the volume fraction.

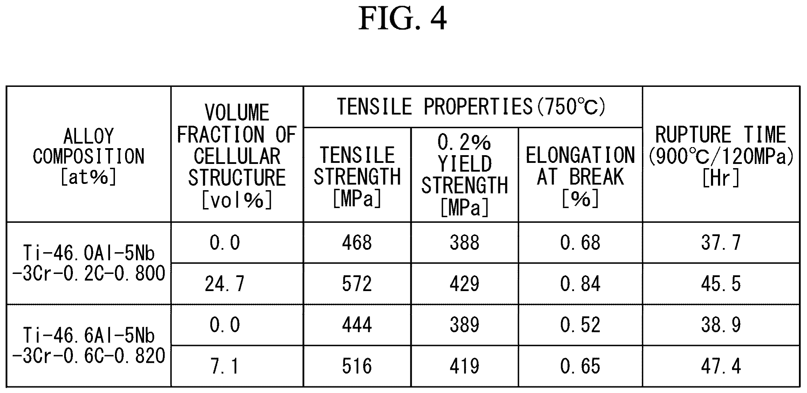

Tensile tests were carried out on alloys 1 and 2 to measure tensile strength, 0.2% yield strength, and elongation at break at 750°C. In addition, creep rupture tests were carried out to measure the rupture time at 900°C under 120 MPa. The results are shown in Fig. 4.

Fig. 4 also shows, for comparison, the tensile properties and rupture time of alloys 1 and 2 subjected only to the second heat treatment without the first heat treatment. In both alloys 1 and 2, high-temperature tensile strength, 0.2% yield strength, and elongation at break were improved by the precipitation of the cellular structure. Furthermore, an improvement in rupture time was also confirmed due to the precipitation of the cellular structure.

When the same first heat treatment and second heat treatment conditions were applied, the volume fraction of the cellular structure was higher in Alloy 1, which had a lower Al content and lower contents of α-stabilizing elements C and O. In addition, in Alloy 2, which contains an upper limit value of C content effective in improving creep properties, the cellular structure was also formed.

The cellular structure is a structure formed by a cellular precipitation reaction, and the precipitation reaction of the cellular structure progresses with increasing the holding time at the second temperature in accordance with the Johnson-Mehl-Avrami equation, resulting in an increased volume fraction of the cellular structure. In addition, the growth rate of the cellular structure depends on the diffusion coefficient, and the diffusion coefficient depends on temperature. It is thus obvious that a higher second temperature proceeds the precipitation reaction of the cellular structure. Accordingly, it is also obvious that the volume fraction of the cellular structure can be controlled by the second temperature and the holding time of the second heat treatment.

In the case of the TiAl-based alloy according to the present embodiment, the secondary lamellar structure is a fine structure containing an α₂ phase, which is a strengthening phase, and constitutes an aggregate of (α₂/γ) lamellar grains mainly composed of the γ phase, and therefore, the secondary lamellar structure can serve a role similar to that of the (α₂/γ/β) cellular structure.

The (β/γ) cellular structure and the (α₂/γ/β) cellular structure, which include the β phase that is an even more effective strengthening phase than the α₂ phase, are more likely to improve high-temperature tensile strength and 0.2% yield strength. Accordingly, in terms of improving strength and yield strength, the effect of the secondary lamellar structure is inferior to that of the (β/γ) cellular structure and the (α₂/γ/β) cellular structure. However, conversely, the secondary lamellar structure does not involve precipitation of the β phase, which may adversely affect creep properties. Accordingly, the secondary lamellar structure tends to be more effective than the cellular structure in improving creep properties. Thus, although there are differences in the properties that can be effectively improved, the precipitation of either the cellular structure or the secondary lamellar structure can serve a similar role.

### <Appendix>

The TiAl-based alloy and the method for producing the same according to the above-described embodiment can be understood, for example, as described below.

The TiAl-based alloy according to the first aspect of the present disclosure comprises, in atomic percent, Al: 45% to 49 %, β-stabilizing elements: 3% to 11%, Ni: ≤ 1.0%, C: ≤ 0.6%, Si: ≤ 0.5%, O: ≤ 1.5%, the balance being Ti and inevitable impurities, the β-stabilizing elements being any of Cr, Nb, V, Mn and Mo or a combination thereof, wherein the TiAl-based alloy has a metal structure comprising (α₂/γ) lamellar grains and a cellular structure or a secondary lamellar structure precipitated at (α₂/γ) lamellar grain boundaries, and wherein the cellular structure is a (β/γ) cellular structure or an (α₂/γ/β) cellular structure, the secondary lamellar structure has (α₂/γ) lamellar grains having a grain diameter smaller than that of the (α₂/γ) lamellar grains, and a volume fraction of the cellular structure or the secondary lamellar structure is 1 vol% or more and 50 vol% or less.

In the above first aspect, the metal structure may include other constituent phases, the other constituent phases may include massive γ phases, and the volume fraction of the other constituent phases may be 30 vol% or less.

The method for producing a TiAl-based alloy according to the second aspect of the present disclosure, wherein the TiAl-based alloy is held at a first temperature for a predetermined period of time in an (α + γ) two-phase region, an α single-phase region, a (β + α) two-phase region, or a (β + α + γ) three-phase region, then the TiAl-based alloy is quenched at a cooling rate equal to or higher than air cooling, and the quenched TiAl-based alloy is held at a second temperature for a predetermined period of time in a (β + γ) two-phase region, a (β + α₂ + γ) three-phase region, or an (α₂ + γ) two-phase region to form a metal structure comprising (α₂/γ) lamellar grains and a cellular structure or a secondary lamellar structure precipitated at (α₂/γ) lamellar grain boundaries, and wherein the second temperature and the holding time at the second temperature are controlled so that the cellular structure is a (β/γ) cellular structure or an (α₂/γ/β) cellular structure, the secondary lamellar structure has (α₂/γ) lamellar grains having a grain diameter smaller than that of the (α₂/γ) lamellar grains, and a volume fraction of the cellular structure or the secondary lamellar structure is 1 vol% or more and 50 vol% or less, the TiAl-based alloy containing, in atomic percent, Al: 45% to 49 %, β-stabilizing elements: 3% to 11%, Ni: ≤ 1.0%, C: ≤ 0.6%, Si: ≤ 0.5%, O: ≤ 1.5%, the balance being Ti and inevitable impurities, the β-stabilizing elements being any of Cr, Nb, V, Mn and Mo or a combination thereof.

In the above second aspect, the metal structure may include other constituent phases, the other constituent phases may include massive y phases, and the first temperature, the holding time at the first temperature, and the cooling rate may be controlled such that a volume fraction of the other constituent phases becomes 30 vol% or less.

A secondary lamellar structure containing an α₂ phase, which is a strengthening phase, or a cellular structure containing an α₂ phase and a β phase, which are strengthening phases, is a fine microstructure. The precipitation of such a secondary lamellar structure or cellular structure improves the 0.2% yield strength and the tensile strength of the TiAl-based alloy.

Both the cellular structure and the secondary lamellar structure are structures mainly composed of a γ phase, which behaves as a high-temperature ductile phase. The precipitation of such a cellular structure and secondary lamellar structure improves the elongation at break of the TiAl-based alloy.

The cellular structure is a (β/γ) cellular structure or an (α₂/γ/β) cellular structure. The secondary lamellar structure has (α₂/γ) lamellar grains having a small grain diameter. The cellular structure or the secondary lamellar structure is a structure precipitated by a discontinuous precipitation reaction from prior-α grain boundaries, while maintaining the prior-α grain diameter ((α₂/γ) lamellar grain diameter). By covering the lamellar grain boundaries with a thermodynamically stable cellular structure or secondary lamellar structure while maintaining the (α₂/γ) lamellar grain diameter, dynamic recrystallization and deformation in the vicinity of the lamellar grain boundaries can be suppressed, whereby the creep properties are improved. Thus, the precipitation of the cellular structure and the secondary lamellar structure improves the creep properties of the TiAl-based alloy.

When the content of O is high, the ductility decreases. Therefore, in general, it is preferable to keep the content of O low; however, attempting to reduce the content of O leads to an increase in producing cost. In the above-described aspect of the present disclosure, the volume fractions of the cellular structure and the secondary lamellar structure can be controlled by performing the heat treatment in two stages, and it is thus possible to obtain an alloy having the desired ductility as long as the content of O is within the above-described range.

According to the present disclosure, a TiAl-based alloy combining the desired strength, ductility, and creep properties can be obtained.

## Claims

1. A TiAl-based alloy comprising, in atomic percent, Al: 45% to 49 %, β-stabilizing elements: 3% to 11%, Ni: ≤ 1.0%, C: ≤ 0.6%, Si: ≤ 0.5%, O: ≤ 1.5%, the balance being Ti and inevitable impurities, the β-stabilizing elements being any of Cr, Nb, V, Mn and Mo or a combination thereof,
wherein the TiAl-based alloy has a metal structure comprising (α₂/γ) lamellar grains and a cellular structure or a secondary lamellar structure precipitated at (α₂/γ) lamellar grain boundaries,
the cellular structure is a (β/γ) cellular structure or an (α₂/γ/β) cellular structure,
the secondary lamellar structure has (α₂/γ) lamellar grains having a grain diameter smaller than that of the (α₂/γ) lamellar grain, and
a volume fraction of the cellular structure or the secondary lamellar structure is 1 vol% or more and 50 vol% or less.

2. The TiAl-based alloy according to claim 1,
wherein the metal structure comprises other constituent phases,
the other constituent phases comprise massive γ phases, and
the volume fraction of the other constituent phases is 30 vol% or less.

3. A method for producing a TiAl-based alloy, wherein the TiAl-based alloy is held at a first temperature for a predetermined period of time in an (α + γ) two-phase region, an α single-phase region, a (β + α) two-phase region, or a (β + α + γ) three-phase region, then the TiAl-based alloy is quenched at a cooling rate equal to or higher than air cooling, and the quenched TiAl-based alloy is held at a second temperature for a predetermined period of time in a (β + γ) two-phase region, a (β + α₂ + γ) three-phase region, or an (α₂ + γ) two-phase region to form a metal structure comprising (α₂/γ) lamellar grains and a cellular structure or a secondary lamellar structure precipitated at (α₂/γ) lamellar grain boundaries, and wherein
the second temperature and a holding time at the second temperature are controlled so that the cellular structure is a (β/γ) cellular structure or an (α₂/γ/β) cellular structure;
the secondary lamellar structure has (α₂/γ) lamellar grains finer than the (α₂/γ) lamellar grains; and
a volume fraction of the cellular structure or the secondary lamellar structure is 1 vol% or more and 50 vol% or less, the TiAl-based alloy containing, in atomic percent, Al: 45% to 49 %, β-stabilizing elements: 3% to 11%, Ni: ≤ 1.0%, C: ≤ 0.6%, Si: ≤ 0.5%, O: ≤ 1.5%, the balance being Ti and inevitable impurities, the β-stabilizing elements being any of Cr, Nb, V, Mn and Mo or a combination thereof,.

4. The method for producing a TiAl-based alloy according to claim 3,
wherein the metal structure comprises other constituent phases,
the other constituent phases comprise massive γ phases, and
the first temperature, a holding time at the first temperature, and the cooling rate are controlled such that a volume fraction of the other constituent phases is 30 vol% or less.
